# EUROPEAN PATENT SPECIFICATION

(11) **EP 3 221 528 B1**
(45) Date of publication and mention of the grant of the patent: **27.03.2019**
(21) Application number: 15800918.3
(22) Date of filing: 19.11.2015
(51) Int. Cl.: E04C 2/04, C04B 28/14

(54) **CONSTRUCTION PANEL HAVING IMPROVED FIXING STRENGTH**
BAUPLATTE MIT VERBESSERTER BEFESTIGUNGSFESTIGKEIT
PANNEAU DE CONSTRUCTION PRÉSENTANT UNE MEILLEURE RÉSISTANCE DE FIXATION

(30) Priority: 20.11.2014 GB 201420674
(43) Date of publication of application: 27.09.2017
(73) Proprietor: Saint-Gobain Placo SAS, 92150 Suresnes (FR)
(72) Inventor: BROOKS, Laura, Coventry West Midlands CV3 2TT (GB); JUPP, Nicola, Coventry West Midlands CV3 2TT (GB); SPARKES, Joanna, Coventry West Midlands CV3 2TT (GB); RICHARDSON, Adam, Coventry West Midlands CV3 2TT (GB); JONES, Nicolas, Coventry West Midlands CV3 2TT (GB); RIDEOUT, Jan, Coventry West Midlands CV3 2TT (GB)
(74) Representative: Chapman IP
(86) International application number: PCT/GB2015/053538
(87) International publication number: WO 2016/079530

(56) References cited:
- EP-A1- 2 743 075
- US-A- 3 297 601
- US-A1- 2001 001 218
- BAIBOLOV, S.M. ET AL: "Raw material mix for producing decorative and acoustical material", CHEMICAL ABSTRACTS, vol. 100, no. 22, 28 May 1984 (1984-05-28) , XP000182570, ISSN: 0009-2258 & SU 1 076 422 A1 (ALMA ATINSK ARKHITEKTUR [SU]) 29 February 1984 (1984-02-29)

## Description

### Field of the invention

The present invention relates to panels for use in building construction. In particular, the present invention relates to panels for providing partitions to which items such as sinks, televisions, or radiators may be affixed.

### Background to the invention

Light-weight panels such as plasterboard (e.g. gypsum plasterboard), polystyrene board and fibreboard are commonly used to provide partitions within buildings. Their advantages for this application include the fact that they are light and quick to install.

However, in certain cases, such light-weight panels may have the drawback that they are not strong enough to support fixtures (e.g. sinks, televisions, radiators, fire extinguishers, shelves and any other item that requires attachment to the panel). In such cases, the weight of the fixture may cause the fixing means (e.g. screws) to be pulled out of the panel, such that the fixture falls away from the partition.

Typically, this problem has been addressed by providing plywood sheets to increase the fixing strength of the panel. In this case, the plywood sheet is provided on the side of the panel opposite to that on which the fixture is to be located. The plywood sheet may provide increased strength for retaining one or more fixing means (e.g. screws) employed to secure the fixture to the panel. Typically, the plywood sheet is positioned within the partition framework, and the plasterboard then fixed to the plywood, so that it lies outside the partition framework.

As an alternative, metal support means may be provided. These may comprise fixing plates, channels, straps, or metal fasteners. As is the case for plywood sheets, the metal support means are generally positioned on the side of the panel opposite that to which the fixture is to be secured, and act to receive and secure fixing means, e.g. fixing screws, that are used to attach the fixture to the panel.

Both these arrangements have the disadvantage that they require the panels and the additional supporting components to be affixed to each other on-site. Moreover, when metal support means are used, a plurality of such support means may be needed to support the full set of fixing means required to secure the fixture to the panel. Thus, the installation process may be time-consuming and expensive.

Furthermore, the addition of metal support means or plywood sheets increases the weight and thickness of the partition, and/or results in a reduction in cavity wall space. In general, the plywood itself must be cut to size on site, thus increasing the time required for installation and possibly leading to the release of dust and potentially harmful components.

US2001001218A1 discloses a composition suitable for use in the manufacturing of construction board, comprising 40 wt.% of an expanded mineral; (b) 60 wt.% of calcium sulfate; and (c) a synthetic binder. The synthetic binder being selected from: (i) a vinyl acetate emulsion comprising a homogenous blend of suspended polyvinyl acetate particles in polyvinyl alcohol and water, and a solution comprising a 10 - 25% solution of polyvinyl alcohol to water, the solution being present in the composition in an amount of approximately 0.1 -25% of the vinyl acetate emulsion; (ii) a water-based non-V.O.C. acrylic emulsion comprising acrylic particles suspended in solution; and (iii) a water-based non-V.O.C. polyurethane emulsion comprising polyurethane particles suspended in solution. The composition further comprises sodium 0.01 - 10 wt.% trimetaphosphate. The binder further comprises a solution comprising a 5 - 30% solution of nonionic ethoxylated alcohol surfactant to water, the solution being present in the composition in an amount of approximately 0.1 - 25% of the binder. The starch is present at 0.30 - 0.75 wt.%, the boron 0.35 wt.%, and the fire retardant agent are present at about 0.15 - 3 wt.%. The starch is selected from corn starch, dent corn starch, oxidized starch, waxy oxidized starch, dextrin, and white-canary dextrin. The boron source is selected from borate and boric acid, preferably selected from sodium tetraborate pentahydrate and sodium tetraborate decahydrate. The paper cover sheets are formed from a virgin paper pulp comprising fibers having a length of at least one inch, preferably non-wood pulp fibers, more preferably recycled waste paper wood pulp fibers. The paper cover sheets comprise a multi-layer structure, the paper cover sheets further comprising a fiberglass mesh integrated between an inner face liner of the paper cover sheet and remaining layers of the multi-layer stricture, and fire retardant agent selected boric acid, zinc berate, sulfamates, diammonium phosphate, nitrogen compounds, antimony oxide, silica, titanium oxide, and zircon.

EP2743075 A1 discloses a panel for providing partitions for fixing items e.g. sinks in building and has polymer-based lamina that is formed by material with fracture toughness greater than a gypsum plasterboard. The panel is for use in building construction, for providing partitions for affixing items such as sinks, TV, fire extinguisher, shelf or radiator. The panel has a gypsum plasterboard including two opposed faces and a polymer based lamina provided on one of the faces of the gypsum plasterboard. The polymer-based toughness is greater than 1 MPa.m^{1/2}. The improved panels that are able to retain fixing unit and support fixtures do not require time-consuming installation processes. The occurrence of stripping of screw hole threads formed in the lamina is reduced by selecting the material of the backing lamina which has fracture toughness that is sufficiently high. The fixing strength of the panel is improved by selecting a lamina that has a thickness of about 1mm. The necessary stiffness to improve the fixing strength of the panel is provided by the lamina, since the lamina is solid and non-porous. The polymer-based lamina is either a monolithic polymer or a composite having a polymer matrix. The polymer-based lamina is provided by a fiber-reinforced polymer. The polymer-based lamina comprises principally a thermoplastic polymer or thermosetting polymer. The polymer-based lamina is reinforced by polymeric fibers. The polymer-based lamina is selected from the group comprising PVC, polycarbonate, nylon, acetyl, self-reinforced polypropylene and Bakelite.

Therefore, there is a need to provide improved panels that are able to retain fixing means and support fixtures, and that do not require time-consuming installation processes.

### Summary of the invention

Investigations have been carried out into the use of polymeric additives to strengthen gypsum panels. Surprisingly, it has been found that by using a combination of starch, polyvinyl acetate and glass fibres, certain advantages in the manufacture and performance of gypsum panels may be achieved.

Therefore, in a first aspect, the present invention may provide a gypsum panel comprising a first polymeric additive and a second polymeric additive distributed therein, wherein the first polymeric additive is polyvinyl acetate and the second polymeric additive is starch the gypsum panel having glass fibres embedded therein in an amount greater than 2 wt% and less than 10 wt%relative to the gypsum; wherein the total amount of the first and second polymeric additives is greater than 4 wt% and less than 15 wt% relative to the gypsum.

It has been found that the combination of starch and a synthetic polymer may result in one or more of the following advantages in the manufacture and performance of gypsum panels:
- increased strength;
- greater ease of manufacturing due to the increased fluidity of stucco slurries containing both additives; and
- increased resistance to hygroscopic expansion.
Typically, the first polymeric additive is present in an amount equal to or greater than the second polymeric additive. However, in certain cases, the first polymeric additive may be present in an amount than is less than 40% of the total amount of the first and second additives, possibly less than 30%.

In general, the total amount of the first and second polymeric additives is greater than 4 wt% relative to the gypsum. The total amount of the first and second polymeric additives is less than 15 wt% relative to the gypsum, preferably less than 13 wt%.

Preferably, the starch is present in an amount of 1.0% or more, relative to the weight of the gypsum panel, preferably 1.25 wt% or more, more preferably 2.0 wt% or more.

The first polymeric additive is polyvinyl acetate.

The starch may be derived from wheat, potato, tapioca, or corn, for example. Preferably, the starch is derived from corn. In certain embodiments, the starch is a native starch (that is, an unmodified starch). In other embodiments, the starch may be a modified starch, for example, an acid-thinned starch.

In certain embodiments, the starch is a substituted starch, such as described in US7048794. Substituted starches are starch derivatives that have been chemically reacted to replace one or more of the hydroxyl functional groups. Typically, the process involves etherification or esterification of a starch or modified starch which appends ether or ester linkages along the starch polymer backbone. This process is distinct from other modifications typically made to starches such as oxidization, acid-thinning, cross-linking, and pre-gelatinisation, although such processes may also be applied to the starch, prior to or after substitution with one or more types of functionalities.

It is thought that substituted starches act as efficient binders for the inorganic phase of plasterboards, e.g. gypsum, thus increasing the core strength of the plasterboard. Preferably, the starch is insoluble in cold water, but dissolves at a higher processing temperature during forming, setting, or drying of the plasterboard. This is thought to limit excessive migration of the starch, so that it remains in the plasterboard core, to provide a binder for the gypsum crystals.

The substituted starch may comprise hydroxyethylated, hydroxypropylated, and/or acetylated starch. Preferably, the starch is a hydroxyethylated starch.

The starch may be a migratory starch or a non-migratory starch. Non-migratory starches are starches that are retained within the core of the plasterboard and do not migrate to the board surface. By contrast, migratory starches typically migrate to the surface of the plasterboard and serve the purpose of improving the bonding of the plasterboard core to the paper facing (if used).

An example of a non-migratory starch that may be used in the present invention is dextrin.

Preferably, in the case that the starch is present at a level of at least 3 wt% relative to the gypsum, the starch is a migratory starch. Surprisingly, it has been found that at these relatively high starch contents, even a migratory starch will be retained within the plasterboard core in sufficient amounts so as to enhance the fixing strength of the plasterboard. At the same time, the migratory starch may aid in improving the bonding of the plasterboard core to a paper facing (if used), so that there is no need to include multiple starch varieties within the plasterboard.

In the case that the starch is present at a level of at least 3 wt% relative to the gypsum, it is generally preferred that the starch is a native starch, rather than a pre-gelatinised starch. At these relatively high starch levels, pre-gelatinised starch is considered to impart excessive viscosity to the gypsum slurry.

In other cases, the starch may be a pre-gelatinised starch.

In certain embodiments, the starch may be selected to have a low viscosity (e.g. a Brookfield viscosity of less than 60 cps) at a temperature of less than 60°C, and a much higher viscosity (e.g. a Brookfield viscosity of over 10000 cps) at a temperature of 70°C. Such starches are described in e.g. US8252110. These starches have a rheology that is strongly temperature-dependent: it is thought that, at low temperatures, the starch may be dispersed in the core in order to penetrate into the inter-crystalline spaces. As soon as the temperature is above 60°C, the viscosity of the starch increases rapidly up to a very high level to ensure that the starch actually remains in the core and does not migrate to the core/facing interface.

In certain cases, the starch may be incorporated into the gypsum panel by adding flour (for example, wheat flour) to the stucco slurry.

The gypsum panel includes fibres embedded therein. The fibres are present in an amount greater than 2 wt% relative to the gypsum, preferably greater than 3 wt%. The fibres are present in an amount less than 10 wt% relative to the gypsum preferably less than 7 wt%.

The fibres are glass fibres.

Preferably, the gypsum panel is substantially free of boron. Boron additives are considered to represent a risk to health and safety during manufacture of the gypsum panel.

In certain embodiments, the gypsum panel is a plasterboard. In general, the plasterboard has paper facings. These paper facings may comprise both cellulose fibres and glass fibres, as this is thought to improve the fire resistance of the plasterboard. In other cases, the plasterboard may have a mat partially or fully embedded at its surface, for example, a glass mat.

In certain embodiments, the gypsum panel comprises a hydrophobic additive, such as silicone oil or wax.

In certain embodiments, the gypsum panel may contain a biocide.

In certain embodiments, the gypsum panel may contain an anti-shrinkage agent such as unexpanded vermiculite, microsilica, and/or clay, in order to improve the fire-resistance of the panel.

Certain embodiments may include foam or lightweight aggregate such as perlite. Such additives are known in the art to produce lower-density boards having acceptable thickness.

### Detailed description

The invention will now be described by way of example only.

Gypsum plasterboards were prepared using the following general methodology:
Stucco and other dry additives were weighed into a bag and shaken to mix them. Water and wet additives were weighed into a bowl. The fibres were weighed, added to the wet additives in the bowl, and mixed together using an electric mixer for 60 s.

The dry powdered additives were added to the wet additives in the bowl and mixed in with the electric mixer for 30 s.

The resultant slurry was sandwiched between two sheets of paper liner and allowed to hydrate for 25 minutes measured from the time of mixing. The board was then dried in an oven for 1 hour at 160°C.

The resulting plasterboards were 15 mm thick.

### Example 1

A gypsum plasterboard was prepared from the following ingredients:
- stucco;
- polyvinyl acetate in an amount of 6 wt% relative to the stucco (the polyvinyl acetate is available under the trade name Mowilith S1);
- starch in an amount of 6 wt% relative to the stucco (the starch is available under the trade name C Flex 03408);
- Glass fibres in an amount of 3 wt% relative to the stucco.

### Example 2

A gypsum plasterboard was prepared from the following ingredients:
- stucco;
- polyvinyl acetate in an amount of 6 wt% relative to the stucco (the polyvinyl acetate is available under the trade name Vinamul 8481);
- starch in an amount of 6 wt% relative to the stucco (the starch is available under the trade name C Flex 03408);
- Glass fibres in an amount of 3 wt% relative to the stucco.

### Example 3

A gypsum plasterboard was prepared from the following ingredients:
- stucco;
- polyvinyl acetate in an amount of 2.5 wt% relative to the stucco (the polyvinyl acetate is available under the trade name Vinamul 8481);
- starch in an amount of 2.5 wt% relative to the stucco (the starch is available under the trade name Merifilm 102);
- Glass fibres in an amount of 5 wt% relative to the stucco.

### Example 4

A gypsum plasterboard was prepared from the following ingredients:
- stucco;
- polyvinyl acetate in an amount of 3.75 wt% relative to the stucco (the polyvinyl acetate is available under the trade name Vinamul 8481);
- starch in an amount of 1.25 wt% relative to the stucco (the starch is available under the trade name Merifilm 102);
- Glass fibres in an amount of 5 wt% relative to the stucco.

### Example 5

A gypsum plasterboard was prepared from the following ingredients:
- stucco;
- polyvinyl acetate in an amount of 6.25 wt% relative to the stucco (the polyvinyl acetate is available under the trade name Mowilith SI);
- starch in an amount of 6.25 wt% relative to the stucco (the starch is available from Grain Processing Corporation under the trade name Coatmaster K57F);
- Glass fibres in an amount of 3% relative to the stucco

### Example 6 (not falling under the scope of the invention)

A gypsum plasterboard was prepared from the following ingredients:
- stucco;
- polyvinyl acetate in an amount of 6 wt% relative to the stucco (the polyvinyl acetate is available under the trade name Vinamul 8481);
- starch in an amount of 0.5 wt% relative to the stucco (the starch is available under the trade name Merifilm 102);
- Glass fibres in an amount of 2 wt% relative to the stucco

### Example 7 (not falling under the scope of the invention)

A gypsum plasterboard was prepared from the following ingredients:
- stucco;
- polyvinyl acetate in an amount of 0.5 wt% relative to the stucco (the polyvinyl acetate is available under the trade name Vinamul 8481);
- starch in an amount of 6 wt% relative to the stucco (the starch is available under the trade name Merifilm 102);
- Glass fibres in an amount of 2 wt% relative to the stucco

### Example 8 (not falling under the scope of the invention)

A gypsum plasterboard was prepared from the following ingredients:
- stucco;
- polyvinyl acetate in an amount of 4.5 wt% relative to the stucco (the polyvinyl acetate is available under the trade name Vinamul 8481);
- starch in an amount of 1.5 wt% relative to the stucco (the starch is available under the trade name Merifilm 102);
- Glass fibres in an amount of 2 wt% relative to the stucco

### Example 9 (not falling under the scope of the invention)

A gypsum plasterboard was prepared from the following ingredients:
- stucco;
- polyvinyl acetate in an amount of 1.5 wt% relative to the stucco (the polyvinyl acetate is available under the trade name Vinamul 8481);
- starch in an amount of 4.5 wt% relative to the stucco (the starch is available under the trade name Merifilm 102);
- Glass fibres in an amount of 2 wt% relative to the stucco

### Comparative Example 1a

A gypsum plasterboard was prepared from the following ingredients:
- stucco;
- starch in an amount of 12 wt% relative to the stucco (the starch is available under the trade name C Flex 03408);
- Glass fibres in an amount of 3 wt% relative to the stucco.

### Comparative Example 3a

A gypsum plasterboard was prepared from the following ingredients:
- stucco;
- starch in an amount of 5 wt% relative to the stucco (the starch is available under the trade name Merifilm 102);
- Glass fibres in an amount of 5 wt% relative to the stucco.

### Comparative Example 5a

A gypsum plasterboard was prepared from the following ingredients:
- stucco;
- starch in an amount of 12.5 wt% relative to the stucco (the starch is available from Grain Processing Corporation under the trade name Coatmaster K57F);
- Glass fibres in an amount of 3% relative to the stucco

### Fluidity

Slump diameter was measured as an indicator of fluidity of stucco slurry that was used in the production of the plasterboards. The procedure was carried out in line with British Standard EN13963. The diameter was measured before the slurry was subjected to mechanical vibration. The results are set out in Table 1.

**Table 1**

| **Example** | **Slump diameter** |
|---|---|
| Example 1 | 102 mm |
| Example 2 | 102 mm |
| Comparative example 1a | 95 mm |

### Expansion with humidity

Expansion with humidity was measured according to ASTM D1037 from initial conditions of 23°C and 50% relative humidity to final conditions of 20°C and 90% relative humidity. The samples were 200mm long and 50mm thick. The results are set out in Table 2.

**Table 2**

| **Example** | **Expansion with humidity** |
|---|---|
| Example 3 | 0.024 |
| Example 4 | 0.018 |
| Comparative example 3a | 0.034 |

### Screw pull-out strength

Screw pull-out tests were carried out on samples measuring 100mm by 100mm that had been conditioned at a temperature of 23°C and a relative humidity of 50%. A 50mm single thread wood screw was inserted into the sample, passing through a metal load transfer element positioned on the surface of the sample. The load transfer element has a first portion that is configured to lie between the screw head and the surface of the sample, and a second portion that is configured to engage with a testing machine so as to allow a load to be applied to the screw along the axis of the screw. The screw was tightened to a torque of 1Nm.

The specimen was then mounted in a Zwick Universal Testing Machine and a 10N pre-load applied to the screw along the axis of the screw. Subsequently, the load was increased by setting a constant cross-head speed of 10mm/minute until pull out was achieved.

The results are set out in Table 3. These are averages, each taken from 8 samples.

**Table 3**

| **Example** | **Average screw pull-out strength N** |
|---|---|
| Example 3 | 734 |
| Comparative example 3a | 674 |
| Example 5 | 1523 |
| Comparative example 5a | 1283 |
| Example 6 | 797 |
| Example 7 | 688 |
| Example 8 | 783 |
| Example 9 | 604 |

## Claims

1. A gypsum panel comprising a first polymeric additive and a second polymeric additive distributed therein, wherein the first polymeric additive is polyvinyl acetate and the second polymeric additive is starch;
the gypsum panel having glass fibres embedded therein in an amount greater than 2 wt% and less than 10wt% relative to the gypsum;
wherein the total amount of the first and second polymeric additives is greater than 4 wt% and less than 15 wt% relative to the gypsum.

2. A gypsum product according to claim 1, wherein the first polymeric additive is present in an amount equal to or greater than the second polymeric additive.

3. A gypsum product according to any one of the preceding claims, wherein the starch is ethylated starch.

## Patentansprüche

1. Gipsplatte, die ein erstes polymeres Zusatzmittel und ein zweites polymeres Zusatzmittel umfasst, die darin verteilt sind, wobei das erste polymere Zusatzmittel Polyvinylacetat ist und das zweite polymere Zusatzmittel Stärke ist;
wobei die Gipsplatte darin Glasfasern in einer Menge eingebettet hat, die größer als 2 Gew.-% und weniger als 10 Gew.-% relativ zum Gips beträgt;
wobei die Gesamtmenge der ersten und zweiten polymeren Zusatzmittel größer als 4 Gew.-% und weniger als 15 Gew.-% relativ zum Gips beträgt.

2. Gipsprodukt nach Anspruch 1, wobei das erste polymere Zusatzmittel in einer Menge vorhanden ist, die gleich oder größer als das zweite polymere Zusatzmittel ist.

3. Gipsprodukt nach einem der vorhergehenden Ansprüche, wobei die Stärke ethylierte Stärke ist.

## Revendications

1. Un panneau de plâtre contenant un premier additif polymère et un deuxième additif polymère réparti dans celui-ci, où le premier additif polymère est acétate de polyvinyle et le deuxième additif polymère est amidon,
le panneau de plâtre possédant des fibres de verre incorporées dans celui-ci dans une quantité supérieure à 2% en poids et inférieure à 10% en poids par rapport au plâtre,
où la quantité totale des premier et deuxième additifs polymères est supérieure à 4% en poids et inférieure à 15% en poids par rapport au plâtre.

2. Un produit de plâtre selon la Revendication 1, où le premier additif polymère est présent dans une quantité égale ou supérieure au deuxième additif polymère.

3. Un produit de plâtre selon l'une quelconque des Revendications précédentes, où l'amidon est de l'amidon éthylé.
